# EUROPEAN PATENT APPLICATION

(11) **EP 1 650 875 A2**
(43) Date of publication of application: **26.04.2006**
(21) Application number: 05022346.0
(22) Date of filing: 13.10.2005
(51) Int. Cl.: H04B 1/04, H04B 1/18

(54) **Automatic adjustment circuit, automatic adjustment method and portable terminal**

(30) Priority: 21.10.2004 JP 2004307309
(71) Applicant: NEC CORPORATION, Tokyo (JP)
(72) Inventor: Yamazaki, Yasuyuki, Kakegawa-shi Shizuoka (JP)
(74) Representative: Vossius & Partner

(57) **Abstract**

An automatic adjustment circuit, including: a passive element disposed in an end portion of a circuit board; and an impedance adjustment circuit disposed between the passive element and a ground section of the circuit board to adjust impedance of the passive element.

## Description

The present invention relates to an automatic adjustment circuit and an automatic adjustment method designed to prevent gain deterioration during a telephone conversation using a radio communication device such as a portable telephone or a personal handyphone system (PHS), and to a portable terminal using the same.

Referring to FIG. 1, in a conventional portable telephone, a radio signal 2 outputted from a radio circuit 1 is transmitted through an antenna 4 disposed in an end of a circuit board 3. On the other hand, a radio signal 2 transmitted from a portable telephone base station (not shown) is received through the antenna 4. In this case, when a length of the circuit board 3 is about half of a wavelength of a transmission/reception frequency, a current distribution of a center 5 of the circuit board 3 becomes large as shown in FIG. 2. In such a case, as shown in FIG. 3, the center 5 of the circuit board 3 comes into close contact with a cheek portion of a human head during a telephone conversation, causing great deterioration of an antenna gain.

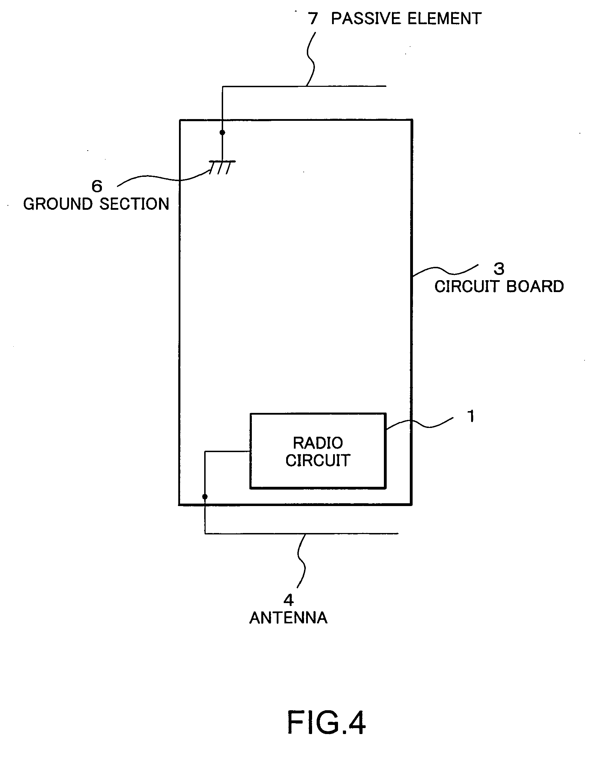

To prevent this problem, conventionally as shown in FIG. 4, a passive element 7 has been connected to a ground section 6 in an end of the circuit board 3 so that the circuit board 3 appears to be long. Accordingly, a current distribution on the circuit board 3 is changed, and concentration of currents in the center 5 of the circuit board 3 is prevented, whereby deterioration of the antenna gain during a telephone conversation is prevented (disclosed in WO 99/65108)

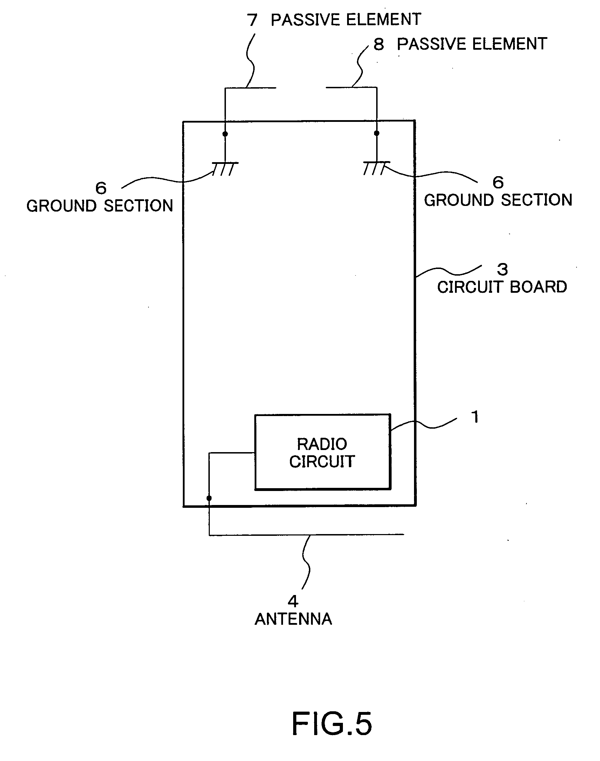

Generally, a length of the passive element 7 is decided by taking a balance of transmission/reception characteristics into consideration. In other words, the length of the passive element 7 is matched with a center frequency of a transmission/reception band to prevent concentration of currents in the center 5 of the circuit board 3. However, if a band to prevent concentration of currents in the center 5 is narrow, there occurs a problem in that satisfactory effects cannot be obtained at a band end frequency. Additionally, as shown in FIG. 5, to prevent the deterioration of the antenna gain during a telephone conversation at a frequency band including a band end frequency, a method of mounting a second passive element 8 (two or more are possible) may be employed. However, this method has a problem of increases in mounting volume and cost of a portable telephone.

It is therefore an object of the present invention to provide an automatic adjustment circuit and an automatic adj ustment method designed to prevent deterioration of an antenna gain during a telephone conversation, and a portable terminal.

It is another object of the present invention to provide an automatic adjustment circuit and an automatic adjustment method designed to prevent concentration of currents in a center of a circuit board at all transmission/reception frequencies, and a portable terminal.

It is yet another obj ect of the present invention to provide an automatic adjustment circuit and an automatic adjustment method designed to automatically adjust impedance of a passive element to proper impedance according to a transmission/reception frequency, and a portable terminal.

According to the present invention, there is provided an automatic adjustment circuit, including: a passive element disposed in an end portion of a circuit board; and an impedance adjustment circuit disposed between the passive element and a ground section of the circuit board to adjust impedance of the passive element.

A portable terminal according to the present invention includes the automatic adjustment circuit.

According to the present invention, there is provided an automatic adjustment method, including the steps of: causing an antenna disposed in a circuit board to transmit/receive a radio signal; and adjusting impedance.of a passive element disposed in the circuit board according to a frequency used when the antenna transmits/receives the radio signal.

A portable terminal according to the present invention uses the automatic adjustment method.

According to the present invention, the impedance of the passive element is automatically adjusted to proper impedance according to the transmission/reception frequency. Thus, a current excited on the circuit board does not concentrate in the center thereof. As a result, the present invention provides an effect that it is possible to prevent deterioration of an antenna gain at all transmission/reception frequency bands during a telephone conversation. Moreover, the number of passive elements to be mounted does not need to be two or more, so the invention provides an effect that it is possible to reduce mounting space and to achieve low costs.

These and other aspects, features and advantages of the invention will become more fully apparent from the following detailed description taken in conjunction with the accompanying drawings. In the drawings:

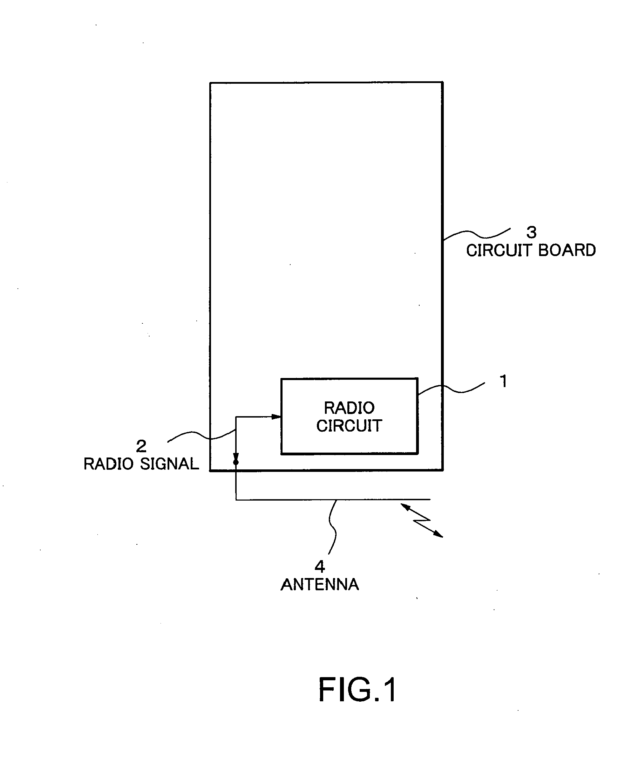

FIG. 1 is a first block diagram of a conventional portable telephone;

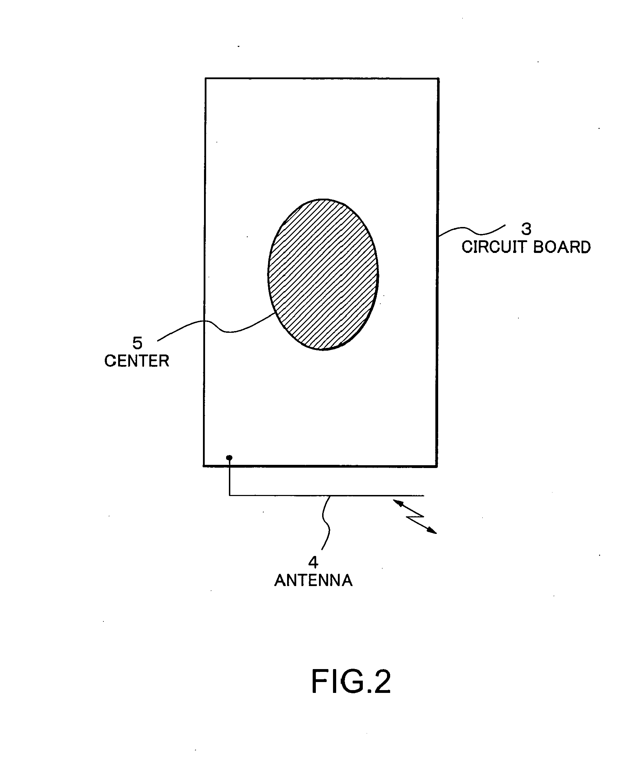

FIG. 2 shows a current distribution of the conventional portable telephone;

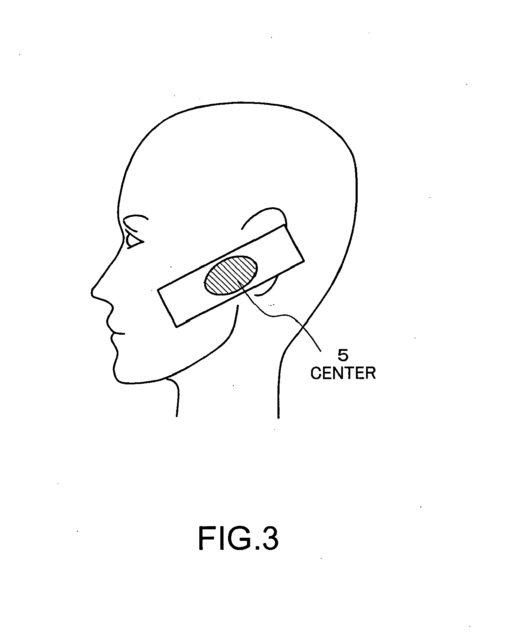

FIG. 3 shows a state in which the conventional portable telephone is in close contact with a cheek portion of a human head;
FIG. 4 is a second block diagram of the conventional portable telephone;
FIG. 5 is a third block diagram of the conventional portable telephone;

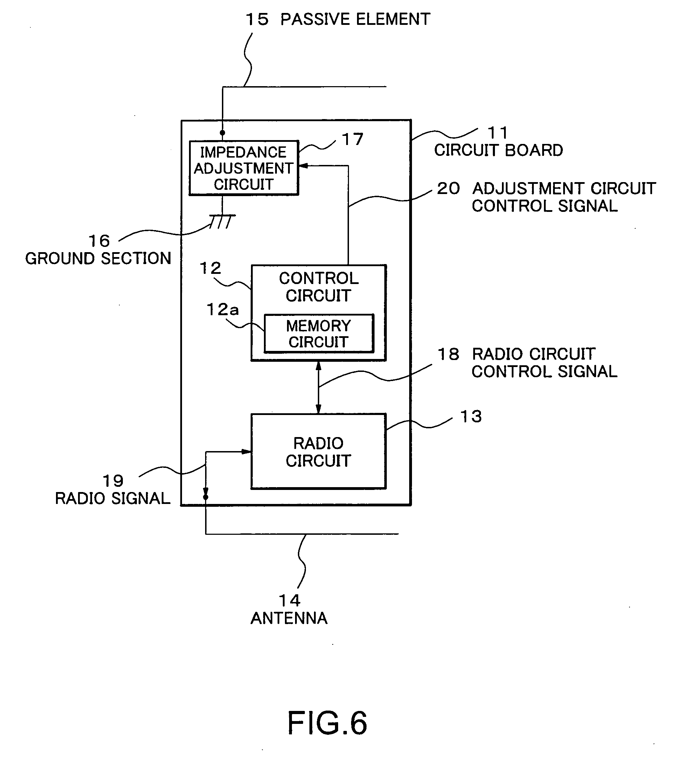

FIG. 6 is a block diagram of an automatic adjustment circuit according to the present invention;

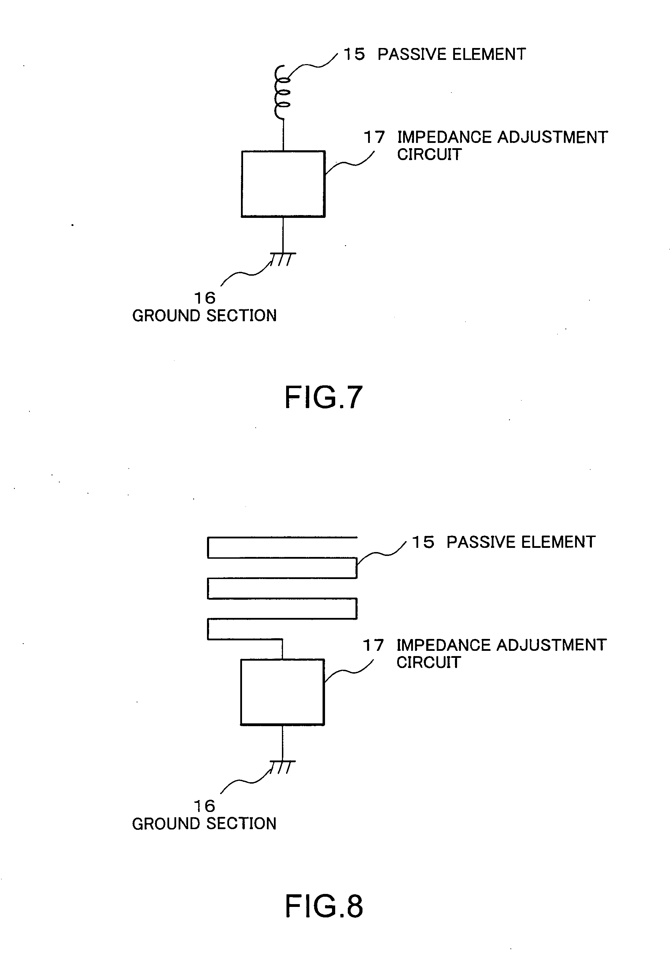

FIG. 7 shows a first shape (coil shape) of a passive element;
FIG. 8 shows a second shape (meandering shape) of the passive element;

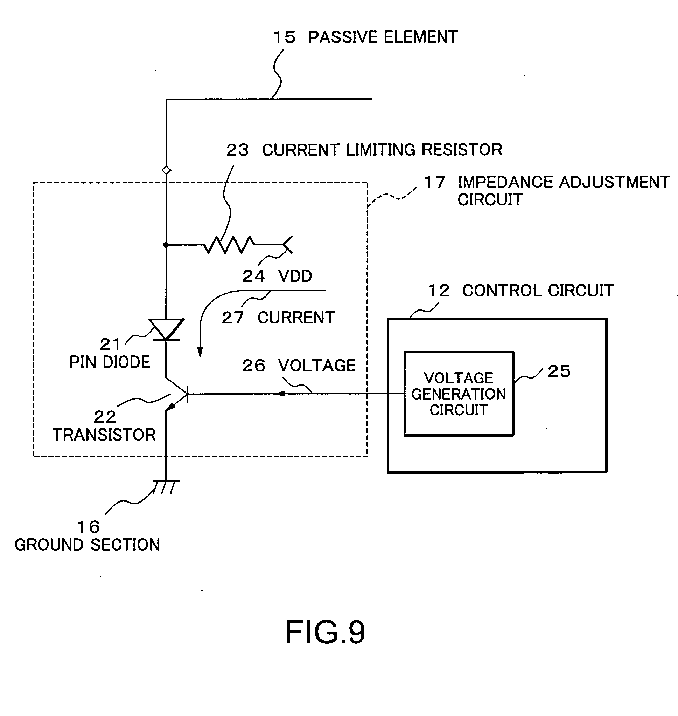

FIG. 9 is a first block diagram of an impedance adjustment circuit;

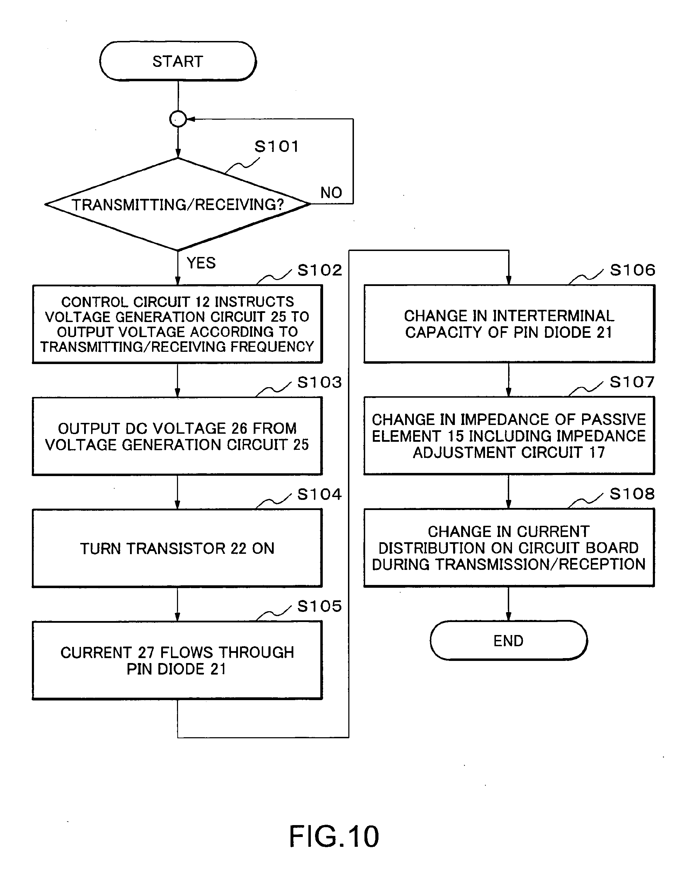

FIG. 10 is a flowchart illustrating an operation according to the present invention;

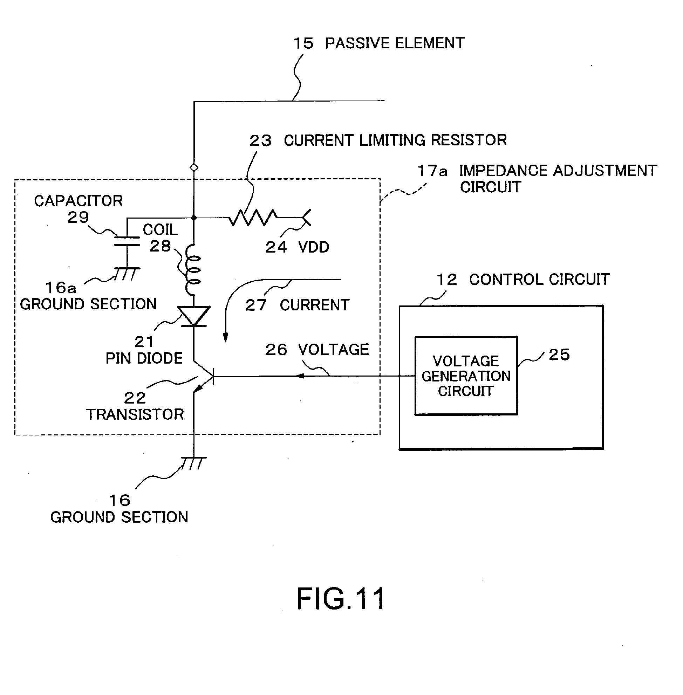

FIG. 11 is a second block diagram of the impedance adjustment circuit; and

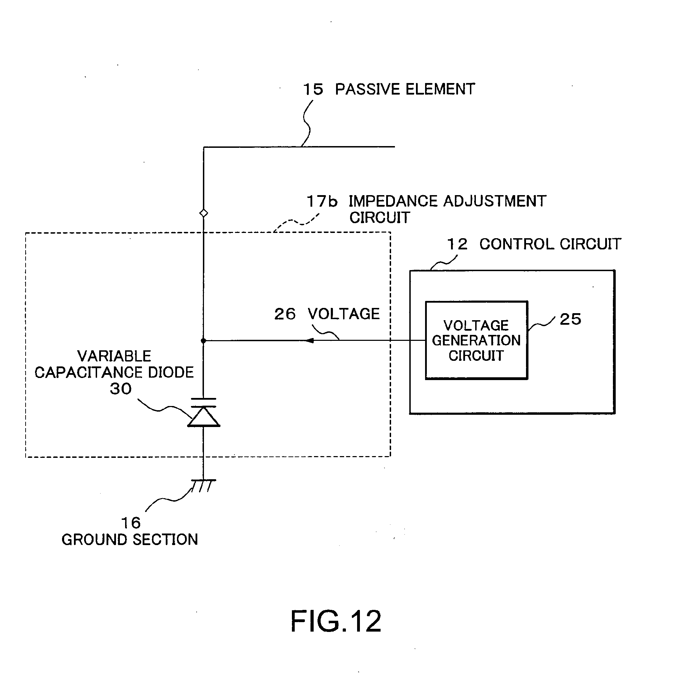

FIG. 12 is a third block diagram of the impedance adjustment circuit.

A first embodiment of the present invention will be described below with reference to the accompanying drawings.

FIG. 6 is a block diagram showing an automatic adjustment circuit of the present invention. The automatic adjustment circuit includes a circuit board 11, a control circuit 12, a radio circuit 13, an antenna 14, a passive element 15, a ground section 16, and an impedance adjustment circuit 17.

The circuit board 11, on which the automatic adjustment circuit is mounted, is incorporated in a casing of a radio communication device. The circuit board 11 has, for example, a rectangular shape constituted of long and short sides, and a length of the long side is half or nearly half of a wavelength of a transmission/reception frequency. The control circuit 12 is a unit to control the entire radio communication device, and recognizes a frequency during transmission/reception. The control circuit 12 generates a radio circuit control signal 18 andanadjustmentcircuit control signal 20. When a memory device to store data is necessary, a memory circuit 12a may be disposed in the control circuit 12. The radio circuit 13 is a unit or a circuit for modulating/demodulating a radio signal 19 transmitted between a base station or between other radio communication devices based on the radio circuit control signal 18. The antenna 14 is a unit for transmitting the radio signal 19 between the base station or between other radio communication devices. The passive element 15 is a passive element with its one end open. The ground section 16 grounds the impedance adjustment circuit 17. The impedance adjustment circuit 17 changes impedance of the passive element 15 according to a transmission/reception frequency based on the adjustment circuit control signal 20 from the control circuit 12. Specifically, the impedance adjustment circuit 17 adjusts impedance of the passive element 15 so as to prevent concentration of currents in a center of the circuit board 11. In other words, the impedance adjustment circuit 17 adjusts the impedance of the passive element 15 so as to disperse currents concentrated in the center of the circuit board 11.

In the circuit board 11, the control circuit 12 is disposed between the radio circuit 13 and the impedance adjustment circuit 17. The radio circuit 13 is disposed between the control circuit 12 and the antenna 14. The antenna 14 is disposed in an end of a long side of the circuit board 11 (one of circuit board ends). The impedance adjustment circuit 17 is disposed between the control circuit 12 and the passive element 15, and connected to the ground section 16. The passive element 15 is disposed in, of the ends of the long sides of the circuit board, an end opposed to the antenna 14 (opposite circuit board end). The opposite circuit board end includes a circuit board end which faces the circuit board end having the antenna 14 disposed therein. Further, the circuit board end on the opposite side includes a portion of a side face of the circuit board 11 near the circuit board end opposed to the antenna 14.

The control circuit 12 generates the radio circuit control signal 18 to control the radio circuit 13. The radio signal 19 received by the antenna 14 is sent to the radio circuit 13. The radio circuit 13 demodulates the radio signal 19. The control circuit 12 receives the signal demodulated by the radio circuit 13. When the radio communication device is ready for a telephone conversation, a current is excited in the circuit board 11 during transmission/reception. The excited current flows through a conductive portion of the circuit board 11. A current distribution of the circuit board 11 concentrates in the center of the circuit board 11, leading to an increase of an amount of current therein. The large amount of current in the center causes deterioration of an antenna gain when the center of the circuit board 11 of the radio communication device comes close to a human head during a telephone conversation.

Thus, according to the present invention, the circuit board 11 includes the passive element 15 and the impedance adjustment circuit 17 connected in series to the passive element 15. As will be described below, the impedance adjustment circuit 17 is adjusted to be capacitive or inductive. Accordingly, a length of the passive element 15 is changed in a pseudo manner. The impedance adjustment circuit 17 adjusted to be capacitive changes the length of the passive element 15 to be short. In this case, the passive element 15 may be set long. Conversely, the impedance adjustment circuit 17 adjusted to be inductive changes the length of the passive element 15 to be long. In this case, the passive element 15 may be set short.

When the passive element 15 and the impedance adjustment circuit 17 are disposed, the excited current also flows through the passive element 15 and the impedance adjustment circuit 17. In other words, a length of the long side of the circuit board 11 is changed in a pseudo manner by the passive element 15 and the impedance adjustment circuit 17. The length of the long side of the circuit board 11 is changed to prevent concentration of currents in the center. In other words, currents concentrated in the center are dispersed. This current dispersion prevents deterioration of the antenna gain.

In FIG. 6, the passive element 15 is in an L shape. However, any shape is employed as long as antenna characteristics can be secured during a telephone conversation. For example, a coil shape shown in FIG. 7 or a meandering shape shown in FIG. 8 may be employed to realize more miniaturization with mounting space taken into consideration. The passive element 15 may be formed on the circuit board 11 by using a pattern. Note that an element length, rather than the shape, of the passive element 15 may be adjusted to a predetermined length. In this case, the length of the passive element 15 is set to a predetermined length in advance. Alternatively, a device connected to the passive element 15 may automatically adjust the length of the passive element 15 according to deterioration of the antenna gain.

FIG. 9 is a circuit diagram showing an example of the impedance adjustment circuit 17 in detail. The impedance adjustment circuit 17 includes a PIN diode 21, a transistor 22, and a current limiting resistor 23.

The PIN diode 21 has an intrinsic semiconductor area held between P and N type semiconductor areas. The transistor 22 is an NPN type transistor in which P and N type semiconductors are joined to each other. A DC/DC converter (not shown) applies a constant voltage VDD 24 to the current limiting resistor 23. The current limiting resistor 23 prevents excessive current flowing when the transistor 22 is turned on.

The impedance adjustment circuit 17 is disposed between the passive element 15 and the ground section 16. The PIN diode 21 is disposed between the passive element 15 and the transistor 22. An anode of the PIN diode 21 is connected to the passive element 15. A cathode of the PIN diode 21 is connected to a collector of the transistor 22. An emitter of the transistor 22 is grounded by the ground section 16. The current limiting resistor 23 is disposed between the anode of the PIN diode 21 and a power source (not shown) for outputting the constant voltage VDD 24.

The impedance adjustment circuit 17 is connected to the control circuit 12. In the control circuit 12, a voltage generation circuit 25 is disposed to output a voltage 26 according to a transmission/reception frequency. In this case, the voltage 26 becomes an adjustment circuit control signal 20.

The voltage 26 according to the transmission/reception frequency is set in advance. An example of this prior setting will be described. A voltage of the voltage generation circuit 25 is changed for each transmission/reception frequency to detect a distribution of currents excited in the circuit board 11. A voltage that causes no concentration of currents in the center of the circuit board 11 is set as a voltage 26 according to a transmission/reception frequency. The distribution of currents is detected by using a magnetic field detection probe or the like. Impedance of the impedance adjustment circuit 17 determined by the set voltage 26 is optimal impedance.

The voltage generation circuit 25 applies the voltage 26 to a base of the transistor 22. However, the voltage generation circuit 25 does not always need to be in the control circuit 12. Actually, the voltage generation circuit 25 may be outside the control circuit 12.

The voltage 26 applied by the voltage generation circuit 25 to the base of the transistor 22 turns the transistor 22 on. After the transistor 22 has been turned on, a current 27 that flows through the current limiting resistor 23 flows to the PIN diode 21. Accordingly, capacity of the PIN diode 21 is changed to thereby change the impedance of the passive element 15 to be capacitive.

As a result, currents do not concentrate in the center of the circuit board at any transmission/reception frequency, thereby providing an effect to prevent deterioration of the antenna gain at all the transmission/reception frequencies during a telephone conversation.

Next, an operation according to the first embodiment of the present invention will be described with reference to a flowchart and drawings.

FIG. 10 is a flowchart illustrating an operation to change the impedance of the passive element 15 by the impedance adjustment circuit 17 of the present invention to thereby change a distribution of currents excited on the circuit board 11 during transmission/reception.

The radio circuit 13 transmits or receives a radio signal 19 between the base station or between other radio communication devices via the antenna 14, whereby the radio communication device transfers a transmitting mode or receiving mode(step S101).

In this case, the control circuit 12 instructs the voltage generation circuit 25 to output a voltage 26 according to a frequency during transmission/reception (step S102). The voltage 26 according to, the frequency during the transmission/reception is preset in the control circuit 12. The output voltage 26 is treated as an adjustment circuit control signal 20.

Then, the voltage generation circuit 25 outputs the voltage 26 to the base of the transistor 22 (step S103). In this case, the voltage 26 is a DC voltage.

When the voltage 26 is applied between the base and the emitter of the transistor 22, the transistor 22 is turned on (step S104).

A constant voltage VDD 24 is applied to cause a current 27 to flow through the current limiting resistor 23. The transistor 22 is turned on to cause the current 27 to flow to the PIN diode 21 according to a base current (step S105). In other words, the transistor 22, the current limiting resistor 23, the constant voltage VDD 24, and the voltage generation circuit 25 constitutes a current source to make the current 27, which is supplied to the PIN diode 21, variable.

An interterminal capacity of the PIN diode 21 changes according to the current 27 (step S106). The impedance of the passive element 15 including the impedance adjustment circuit 17 changes (step S107). In this case, the impedance adjustment circuit 17 changes a length of the passive element 15 in a pseudo manner. Accordingly, the impedance is adjusted to prevent currents from concentrating in the center of the circuit board 11. It is to be noted that the impedance adjustment circuit 17 may physically change the length of the passive element 15.

In the step S107, the impedance of the passive element 15 changes. As a result, distribution of currents excited in the circuit board 11 changes depending on a frequency during transmission/reception (step S108). In other words, the distribution of the currents in which the currents concentrated in the center of the circuit board 11 is changed, thereby eliminating the concentration in the center.

Also, to prevent any of transmission/reception frequencies from causing the concentration of the currents flowing on the circuit board 11 in the center in the distribution of the currents, it is only necessary to adjust the length of the passive element 15 and the output voltage of the voltage generation circuit 25.

The circuitry of the impedance adjustment circuit 17 is only an example. Any circuitry can be employed as long as the impedance of the passive element 15 can be changed according to a transmission/reception frequency.

A few other examples of circuitry of the impedance adjustment circuit 17 will be descried below. It is to be noted that the examples are in no way limitative of the impedance adjustment circuit 17.

FIG. 11 shows an impedance adjustment circuit 17a according to a second embodiment. The impedance adjustment circuit 17a includes a coil 28 between a passive element 15 and a PIN diode 21. In other words, the impedance adjustment circuit 17a includes the PIN diode 21, a transistor 22, a current limiting resistor 23, the coil 28, and a capacitor 29.

The PIN diode 21 has an intrinsic semiconductor area held between P and N type semiconductor areas. The transistor 22 is an NPN type transistor in which P and N type semiconductors are joined to each other. A DC/DC converter (not shown) applies a constant voltage VDD 24 to the current limiting resistor 23. The current limiting resistor 23 prevents excessive flow of a current 27 when the transistor 22 is turned on. The coil 28 works to suppress a change in current 27. The capacitor 29 fine-adjusts impedance of the passive element 15. The capacitor 29 is disposed when necessary.

The impedance adjustment circuit 17a is disposed between the passive element 15 and a ground section 16. The coil 28 is disposed between the passive element 15 and the PIN diode 21. The transistor 22 is disposed between a ground section 16 and the PIN diode 21. An anode of the PIN diode 21 is connected to the coil 28. A cathode of the PIN diode 21 is connected to a collector of the transistor 22. An emitter of the transistor 22 is grounded by the ground section 16. The current limiting resistor 23 and the coil 28 are disposed in series between the anode of the PIN diode 21 and a power source for outputting a constant voltage VDD 24 . When the capacitor 29 is present, there is another grounded ground section 16a, and the current limiting resistor 23 and the capacitor 29 are disposed in series between the power source for outputting the constant voltage VDD 24 and the other ground section 16a. The capacitor 29 is for fine-adjusting impedance, and disposed when necessary. The coil 28 and the capacitor 29 are disposed in series between the anode of the PIN diode 21 and the other ground section 16a. It is to be noted that the other ground section 16a may be a ground section 16.

The impedance adjustment circuit 17a is connected to a control circuit 12. In the control circuit 12, a voltage generation circuit 25 is disposed to output a voltage 26 according to a transmission/reception frequency. In this case, the voltage 26 is an adjustment circuit control signal 20. The voltage 26 according to the transmission/reception frequency may be set as in the case of the first embodiment. The voltage generation circuit 25 applies the voltage 26 to a base of the transistor 22. However, the voltage generation circuit 25 does not need to be in the control circuit 12. Actually, the voltage generation circuit 25 may be outside the control circuit 12.

The voltage 26 applied by the voltage generation circuit 25 to the base of the transistor 22 turns the transistor 22 on. A current 27 that flows through the current limiting resistor 23 and the coil 28 flows to the PIN diode 21. Accordingly, impedance of the passive element 15 changes.

In FIG. 9, the impedance of the passive element 15 is changed to be capacitive by using the capacity change of the PIN diode 21. However, in FIG. 11, the impedance is changed to be inductive by inserting the coil 28.

As a result, currents are prevented frombeing concentrated in the center of the circuit board at any transmission/reception frequency, which provides an effect to prevent deterioration of an antenna gain at all the transmission/reception frequencies during a telephone conversation.

FIG. 12 shows an impedance adjustment circuit 17b according to a third embodiment. In the impedance adjustment circuit 17b, a variable capacitance diode 30 is used in place of the PIN diode 21 of FIG. 9.

The variable capacitance diode 30 is a variable capacitance capacitor which utilizes a change in capacitance (junction capacitance) caused by a change in thickness of a depletion layer of a PN junction of the diode when a voltage is applied in a reverse direction. It is highly reliable because there is no mechanical part.

The impedance adjustment circuit 17b is disposed between a passive element 15 and a ground section 16. The variable capacitance diode 30 is disposed between the passive element 15 and the ground section 16. A cathode of the variable capacitance,diode 30 is connected to the passive element 15. An anode of the variable capacitance diode 30 is grounded by the ground section 16.

The impedance adjustment circuit 17b is connected to a control circuit 12. In the control circuit 12, a voltage generation circuit 25 is disposed to output a voltage 26 according to a transmission/reception frequency. In this case, the voltage 26 is an adjustment circuit control signal 20. The voltage 26 according to the transmission/reception frequency may be set as in the case of the first embodiment. The voltage generation circuit 25 applies the voltage 26 to the passive element 15 and the cathode of the variable capacitance diode 30. However, the voltage generation circuit 25 does not need to be in the control circuit 12. Actually, the voltage generation circuit 25 may be outside the control circuit 12.

In this case, it is only necessary to apply a necessary voltage to the variable capacitance diode 30, and no current flows through the variable capacitance diode 30. The impedance of the passive element 15 can be changed by the voltage-applied variable capacitance diode. As compared with the circuitries shown in FIGS. 9 and 11, a transistor 22 and a current limiting resistor 23 are not necessary for this embodiment. Thus, an effect is provided to greatly simplify the impedance adjustment circuit 17b.

In the description of the present invention, the long side of the circuit board 11 is half or nearly half of the wavelength of the transmission/reception frequency, but the length is not limited to this. For example, the present invention can be applied to a case where a long side of the circuit board 11 is equal to or 3/2 of a wavelength. The present invention has been described by way of example of the radio communication device such as a portable telephone. However, the present invention may be used for a communication device which transmits/receives a signal by cable. In this case, a communication section that transmits/receives a signal is used in place of the radio circuit 13, and a cable that passes a signal is used in place of the antenna 14.

While this invention has been described in connection with certain exemplary embodiments, it is to be understood that the subject matter encompassed by way of this invention is not to be limited to those specific embodiments. On the contrary, it is intended for the subject matter of the invention to include all alternatives, modifications and equivalents as can be included within the spirit and scope of the following claims.

Further, it is the inventor's intent to retain all equivalents of the claimed invention even if the claims are amended during prosecution.

## Claims

1. An automatic adjustment circuit, comprising:
a passive element disposed in an end portion of a circuit board; and
an impedance adjustment circuit disposed between the passive element and a ground section of the circuit board to adjust impedance of the passive element.

2. An automatic adjustment circuit according to claim 1, further comprising an antenna for transmitting/receiving a radio signal to/from an end portion of the circuit board opposed to the end portion in which the passive element is disposed,
wherein the impedance adjustment circuit adjusts the impedance of the passive element according to a frequency used when the antenna transmits/receives the radio signal.

3. An automatic adjustment circuit according to claim 2, further comprising a control circuit for outputting an adjustment circuit control signal to control the impedance adjustment circuit according to the frequency.

4. An automatic adjustment circuit according to claim 3, wherein:
the adjustment circuit control signal is a signal of a voltage; and
the control circuit comprises a voltage generation circuit for outputting the voltage.

5. An automatic adjustment circuit according to claim **1, 2, 3, or 4, wherein:**
the impedance adjustment circuit comprises a PIN diode connected to the passive element; and
a current source for making variable a current supplied to the PIN diode.

6. An automatic adjustment circuit according to claim 5, wherein the impedance adjustment circuit further comprises a coil between the passive element and the PIN diode.

7. **The circuit according to any one of claims 1 to 6, wherein:**
the impedance adjustment circuit comprises a variable capacitance diode connected to the passive element; and
a voltage is applied between the variable capacitance diode and the passive element.

8. **The circuit according to any one of claims 1 to 7,**
wherein the impedance adjustment circuit adjusts the impedance of the passive element to disperse a current in a center of the circuit board.

9. **The circuit according to any one of claims 1 to 8,**
wherein the passive element is formed into a coil shape or a meandering shape.

10. **The circuit according to any one of claims 1 to 9,**
wherein the passive element is formed as a pattern on the circuit board.

11. A portable terminal, comprising the automatic adjustment circuit of **any One Of claims 1 to 10.**

12. An automatic adjustment method, comprising the steps of:
causing an antenna disposed in a circuit board to transmit/receive a radio signal; and
adjusting impedance of a passive element disposed in the circuit board according to a frequency used when the antenna transmits/receives the radio signal.

13. An automatic adjustment method according to claim 12, wherein the adjusting step comprises outputting a voltage according to the frequency.

14. An automatic adjustment method according to claim 13, wherein said outputting comprises adjusting the impedance of the passive element by using the output voltage.

15. **The method according to claim 12, 13, or 14,**
wherein the adjusting step comprises supplying a current to a PIN diode connected to the passive element.

16. An automatic adjustment method according to claim 15, wherein the adjusting step comprises disposing a coil between the PIN diode and the passive element, and adjusting the impedance of the passive element to be inductive.

17. **The method according to any one of claims 12 to 16,**
wherein the adjusting step comprises applying a voltage between a variable capacitance diode and the passive element, the variable capacitance diode being connected to the passive element.

18. **The method according to any one of claims 12 to 17,**
wherein the adjusting step comprises adjusting the impedance of the passive element to disperse a current in a center of the circuit board.

19. A portable terminal, which uses the automatic adjustment method of **any one of claims 12 to 18.**

20. An automatic adjustment circuit, comprising:
a passive element disposed in one end portion of a circuit board;
an antenna, disposed in another end portion of the circuit board, for transmitting/receiving a radio signal; and
impedance adjusting means, disposed between the passive element and a ground section of the circuit board, for adjusting impedance of the passive element,
wherein the impedance adjusting means adjusts the impedance of the passive element according to a frequency when the antenna transmits/receives the radio signal.
